# DEMANDE DE BREVET EUROPEEN

(11) **EP 3 741 620 A1**
(43) Date de publication de la demande: **25.11.2020**
(21) Numéro de dépôt: 20175504.8
(22) Date de dépôt: 19.05.2020
(51) Int. Cl.: B60Q 1/30, B60Q 1/26, B62D 35/00, B62D 37/02

(54) **LAME ARRIÈRE MOBILE COMPRENANT UN DISPOSITIF LUMINEUX EMBARQUÉ**

(30) Priorité: 22.05.2019 FR 1905398
(71) Demandeur: Compagnie Plastic Omnium, 69007 Lyon (FR)
(72) Inventeur: UTTER, Jérôme, 01150 Sainte-Julie (FR); KARRAMKAN, Martin, 01150 Sainte-Julie (FR)
(74) Mandataire: LLR

(57) **Abrégé**

Dispositif aérodynamique pour véhicule automobile comprenant un becquet fixe (1) solidaire de la carrosserie et une lame mobile (2) coulissant dans le becquet fixe (1) selon un axe longitudinal (XX') entre une position retractée et une position déployée dans le prolongement arrière du becquet fixe (1) caractérisé en ce qu'un dispositif lumineux (20), comprenant une source de lumière, est embarqué sur la lame mobile (2) et disposé de manière à émettre de la lumière au niveau d'un bord de fuite (23) s'étendant transversalement le long de l'extrémité arrière de la lame mobile (2).

## Description

L'invention concerne le domaine des dispositifs aérodynamiques embarqués sur les véhicules automobiles.

Ces dispositifs, en forme de becquet prolongeant la forme du toit, ont pour objet de procurer un appui aérodynamique supplémentaire sur l'essieu arrière et/ou de réduire la trainée aérodynamique du véhicule lorsque ce dernier roule à grande vitesse.

Dans le but de renforcer la visibilité arrière du véhicule, en particulier lorsque le véhicule ralentit sa vitesse en freinant, il est connu d'équiper le becquet d'un dispositif lumineux s'étendant sur toute ou partie de la longueur transversale du becquet fixe et s'allumant en même temps que les feux stop du véhicule. Ce dispositif lumineux est placé en règle générale au niveau du bord de fuite du becquet.

De tels dispositifs sont décrits à titre d'exemple dans le document DE 20 2006 010 701 ou encore dans le document FR 2 932 767.

Pour améliorer l'effet aérodynamique, les constructeurs proposent de rendre le becquet mobile.

Ainsi, le document US 5 923 245, ou encore le document US 5 119 068, décrivent un aileron comportant un dispositif lumineux disposé sur le bord de fuite et mobile en rotation autour d'un axe transversal entre une position repliée et une position déployée, de manière à moduler l'angle d'incidence du becquet et augmenter ainsi les appuis verticaux au niveau de l'arrière du véhicule.

Ces dispositifs présentent toutefois l'inconvénient de ne pas rendre visible le dispositif lumineux lorsque l'aileron est en position repliée. En effet, l'angle d'éclairage du dispositif lumineux varie en fonction de l'angle d'incidence de l'aileron et rend ce dispositif lumineux inopérant lorsque l'angle d'incidence est réduit, ce qui conduit à désactiver le dispositif lumineux lorsque l'aileron n'est pas déployé.

Les développements récents pour améliorer le coefficient aérodynamique du véhicule conduisent les constructeurs à proposer des ailerons arrière comportant un becquet fixe et une partie mobile en translation, encore dénommée lame mobile, coulissant dans la partie fixe du becquet dans le sens longitudinal du véhicule de manière à prolonger vers l'arrière la partie fixe. Cette extension de surface vers l'arrière réalisée par la lame mobile permet de réduire les turbulences et améliore ainsi l'aérodynamique au niveau de la partie arrière du véhicule.

Ces dispositifs en translation le long de la direction longitudinale du véhicule ont un effet aérodynamique sensible, y compris à faible vitesse, par exemple dès 70 km/h. Ils permettent en outre de diminuer la trainée du véhicule sans incidence notable sur l'appui arrière.

La présente invention a notamment pour but de proposer une solution technique pour équiper ce nouveau dispositif aérodynamique de moyens lumineux visibles depuis l'arrière du véhicule dans toutes les configurations d'usage.

Le dispositif aérodynamique selon l'invention comprend un becquet fixe solidaire de la carrosserie et une lame mobile coulissant dans le becquet fixe selon un axe longitudinal entre une position retractée et une position déployée dans le prolongement arrière du becquet fixe.

Ce dispositif aérodynamique se caractérise en ce qu'il comporte un dispositif lumineux, comprenant une source de lumière, embarqué sur la lame mobile, et disposé de manière à émettre de la lumière au niveau d'un bord de fuite s'étendant transversalement le long de l'extrémité arrière de la lame mobile.

Placé de la sorte, le dispositif lumineux présente un angle d'incidence autour de l'axe transversal sensiblement constant et reste visible depuis l'arrière du véhicule quelle que soit la position déployée ou rétractée du lame mobile. Il peut donc être rendu actif quelle que soit la vitesse du véhicule tout en respectant les plages angulaires et les intensités d'éclairage strictes, notamment prescrites par les normes ECE R48 et ECE R7.

L'invention prévoit également d'autres caractéristiques optionnelles prises seules ou en combinaison.

Le dispositif lumineux comprend un guide de lumière, comportant une surface d'entrée et une surface de sortie de la lumière, interposé entre la source de lumière disposée en vis-à-vis de la surface d'entrée et le bord de fuite de la lame mobile à proximité immédiate duquel est placée la surface de sortie.

Le matériau formant le au moins un guide de lumière est distinct du matériau formant une partie structurelle de la lame mobile.

La partie structurelle de la lame mobile est formée d'un matériau thermoplastique surmoulée sur le au moins un guide de lumière.

Dispositif aérodynamique selon la revendication 3 dans lequel la partie structurelle de la lame mobile et le guide de lumière sont formés d'un matériau thermoplastique et sont réalisés par bi-injection.

La lame mobile est formée d'un matériau faisant office de guide de lumière recouvert sur l'intégralité de sa surface, à l'exception des surfaces d'entrée et de sortie de la lumière, d'un revêtement opaque ne laissant pas passer la lumière.

La source de lumière du dispositif lumineux est disposée sur le bord de fuite ou à proximité immédiate de ce dernier.

Le dispositif lumineux est formé d'une pluralité de sources de lumière encapsulées dans une gaine transparente et souple.

Une verrine de protection est montée à l'extrémité arrière du bord de fuite pour protéger le dispositif lumineux des agressions extérieures.

Une partie structurelle de la lame mobile est formée d'un matériau thermoplastique surmoulé sur la verrine de protection.

Le dispositif lumineux émet de la lumière sur tout ou partie de la longueur du bord de fuite.

L'alimentation électrique de la source de lumière est formée par :
- un câble électrique disposé à l'intérieur d'une gaine souple ou d'une chaine porte câble, ou
- une bande flexible supportant des pistes conductrices de l'électricité, ou
- des rails conducteurs de l'électricité, disposés sur une surface interne du becquet fixe, collaborant avec des patins collecteurs disposés sur la lame mobile.

Les sources de lumière sont formées par des diodes électroluminescentes.

### Brève description des figures

L'invention sera mieux comprise à la lecture de la description qui va suivre donnée uniquement à titre d'exemple et faite en se référant aux dessins annexés dans lesquels :
[Fig. 1] La figure 1 est une vue schématique en perspective d'un dispositif aérodynamique lorsque la lame mobile est en position rétractée.
[Fig. 2] La figure 2 est une vue schématique en perspective du dispositif aérodynamique lorsque la lame mobile est en position déployée.
[Fig. 3] La figure 3 est une vue schématique simplifiée en coupe, selon un premier mode de réalisation, du dispositif lumineux lorsque la lame mobile est en position rétractée.
[Fig. 4] La figure 4 est une vue schématique simplifiée de dessus, selon le premier mode de réalisation, du dispositif lumineux lorsque la lame mobile est en position rétractée.
[Fig. 5] La figure 5 est une vue schématique simplifiée en coupe, selon le premier mode de réalisation, du dispositif lumineux lorsque la lame mobile est en position rétractée et que la source de lumière est activée.
[Fig. 6] La figure 6 est une vue schématique simplifiée de dessus, selon le premier mode de réalisation, du dispositif lumineux lorsque la lame mobile est en position rétractée et que la source de lumière est activée.
[Fig. 7] La figure 7 est une vue schématique simplifiée en coupe, selon le premier mode de réalisation, du dispositif lumineux lorsque la lame mobile est en position déployée et que la source de lumière est activée.
[Fig. 8] La figure 8 est une vue schématique simplifiée de dessus, selon le premier mode de réalisation, du dispositif lumineux lorsque la lame mobile est en position déployée et que la source de lumière est activée.
[Fig. 9] La figure 9 est une vue schématique simplifiée en coupe, selon un deuxième mode de réalisation, du dispositif lumineux lorsque la lame mobile est en position rétractée.
[Fig. 10] La figure 10 est une vue schématique simplifiée de dessus, selon le deuxième mode de réalisation, du dispositif lumineux lorsque la lame mobile est en position rétractée.
[Fig. 11] La figure 11 est une vue schématique simplifiée en coupe, selon le deuxième mode de réalisation, du dispositif lumineux lorsque la lame mobile est en position rétractée et que la source de lumière est activée.
[Fig. 12] La figure 12 est une vue schématique simplifiée de dessus, selon le deuxième mode de réalisation, du dispositif lumineux lorsque la lame mobile est position rétractée et que la source de lumière est activée.
[Fig. 13] La figure 13 est une vue schématique simplifiée en coupe, selon le deuxième mode de réalisation, du dispositif lumineux lorsque la lame mobile est en position déployée et que la source de lumière est activée.
[Fig. 14] La figure 14 est une vue schématique simplifiée de dessus, selon le deuxième mode de réalisation, du dispositif lumineux lorsque la lame mobile est en position déployée et que la source de lumière est activée.

### Description détaillée

Dans ce qui suit, on se réfèrera au repère XYZ du véhicule dans lequel l'axe longitudinal X'X est orienté de l'arrière vers l'avant du véhicule. Dans un plan horizontal, l'axe transversal Y'Y est perpendiculaire à l'axe longitudinal. L'axe Z'Z représente l'axe vertical perpendiculaire aux axes X'X et Y'Y.

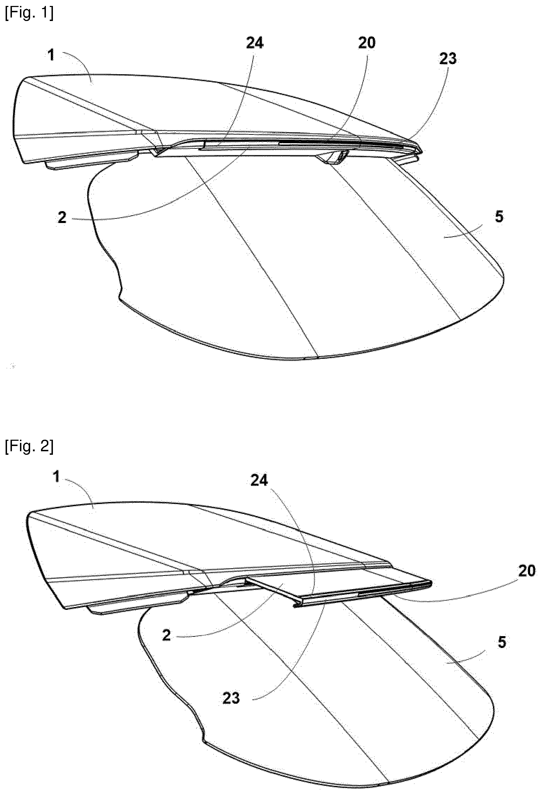

La figure 1 représente une partie arrière de véhicule automobile. Un becquet fixe 1 est disposé dans le prolongement du toit (non représenté) et s'étend vers l'arrière au-dessus de la vitre arrière 5.

La lame mobile 2 est en position rétractée dans l'espace intérieur du becquet fixe 1. Seule l'extrémité arrière, matérialisant la partie arrière du dispositif lumineux 20 et disposée sur bord de fuite 23 de la lame mobile 2, est visible depuis l'extérieur du véhicule.

De manière optionnelle, une verrine transparente 24 recouvre le dispositif lumineux pour le protéger des agressions extérieures.

La figure 2 représente la même partie arrière du véhicule dans laquelle la lame mobile 2 est en position déployée.

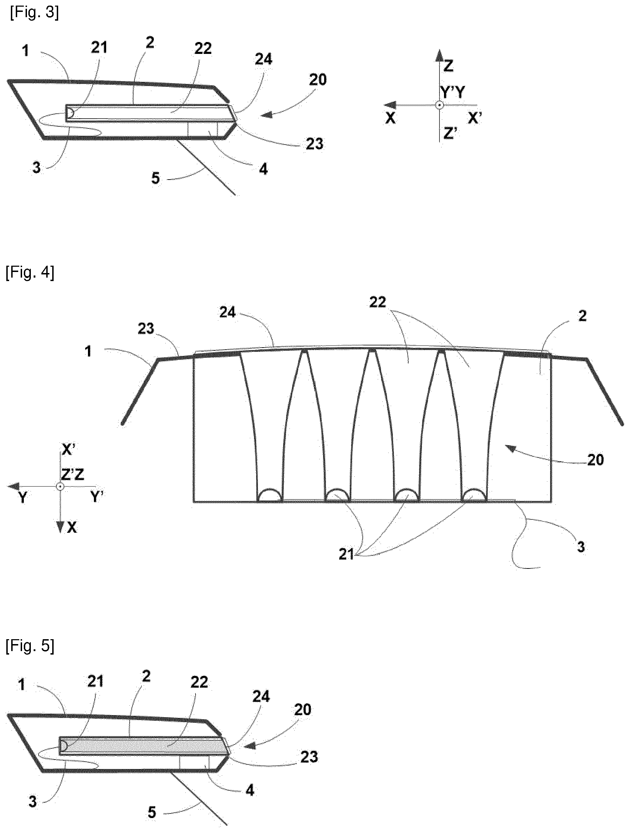

Les figures 4 à 8 représentent un dispositif aérodynamique selon un premier mode de réalisation de l'invention dans lequel le dispositif lumineux est formé d'un ou plusieurs guides de lumière 22 et d'au moins une source de lumière 21. Le guide de lumière est interposé entre la source de lumière 22 et la partie du dispositif lumineux visible depuis l'arrière du véhicule et située sur le bord de fuite 23 de la lame mobile 2.

Les figures 3 et 4 permettent de visualiser les positions dans l'espace par rapport au repère défini ci-dessus des lames mobiles représentées aux figures 3 et 4 et suivantes.

Le guide de lumière 22 se présente sous la forme d'un élément transparent ou translucide comprenant une surface d'entrée de la lumière, et une surface de sortie de la lumière.

La surface de sortie du guide de lumière 22 est placée sur le bord de fuite de la lame mobile ou à proximité de ce dernier.

On entend ici par proximité immédiate les quelques millimètres séparant la surface de sortie du guide de lumière proprement dite et l'extrémité arrière de la lame mobile 2 formés à titre d'exemple par l'épaisseur de la surface arrière de la verrine de protection 24.

Une ou plusieurs sources de lumière 21 sont placées en vis-à-vis de la surface d'entrée, de sorte que la lumière se propage dans le guide de lumière 22 entre la ou les sources de lumière 21 et le bord de fuite 23 disposé à l'extrémité arrière de la lame mobile 2.

Ces sources de lumière 2 peuvent par exemple être formées par des diodes électroluminescentes ou encore des sources laser.

Afin de canaliser la lumière, le guide de lumière est constitué d'une matière telle que du plastique transparent ayant un indice de réfraction plus élevé que le milieu ambiant, en règle générale que l'air ambiant, dans lequel il est destiné à être immergé.

Chaque rayon lumineux admis dans le guide de lumière par la surface d'entrée atteint une paroi interne du guide de lumière en faisant un angle donné par rapport à la normale de la surface atteinte. Lorsque cet angle est supérieur à un angle de seuil déterminé, il est réfléchi à l'intérieur du guide de lumière. Les rayons lumineux se propagent alors dans le guide de lumière par réflexions successives sur les parois internes pour arriver vers la surface de sortie au niveau de laquelle on s'arrange pour qu'ils atteignent les parois internes avec un angle d'incidence, par rapport à la normale à la paroi, inférieur à une valeur de seuil, de sorte qu'ils émergent par réfraction vers l'extérieur du dispositif.

Les matériaux couramment employés pour les guides de lumière sont des polymères, généralement thermoplastiques, choisis préférentiellement dans le groupe constitué par les polymères ou les copolymères amorphes tels que les polyacryliques, les polyesters, les polycarbonates, les polyéthers sulfones ou poly set époxy siloxanes et les polymères d'oléfines cycliques.

On observera ici que le nombre de guides de lumière n'est pas limitatif et que le dispositif lumineux peut tout aussi bien comprendre un seul guide de lumière collaborant avec une ou plusieurs sources de lumière. Préférentiellement, la partie du guide de lumière émergeant vers l'arrière de la lame mobile 2 forme un trait lumineux s'étendant sur tout ou partie du bord de fuite 23. Il est également tout à fait possible, en aménageant à dessein la surface de sortie du guide de lumière, de réaliser des effets lumineux variés tels que, par exemple, un effet de facettes, une ligne lumineuse en pointillée présentant des interruptions, ou encore un effet dans lequel la lumière apparait sous forme de points lumineux donnant l'apparence d'une surface pixélisée.

Aux figures 3 et 4, la lame mobile 2 est en position rétractée. Les sources de lumière sont éteintes.

Un câble électrique 3, disposé à l'intérieur du becquet mobile 1, permet de relier le dispositif lumineux à une source d'alimentation électrique.

Préférentiellement, la partie libre du câble électrique 3, disposée entre le point d'entrée sur le volet mobile 2 et un point d'attache situé dans la cavité du becquet fixe 1, est enveloppée dans une gaine annelée ou une chaine porte-câble (non visible) pour éviter la détérioration des conducteurs électriques entrainée par les mouvements imposés au câble 3 pendant les opérations de déploiement et de rétractation du volet mobile 2.

De manière alternative, le fil peut être monté sur une bande flexible circulant dans un couloir longitudinal aménagé sur la paroi inférieure du becquet fixe ou se déployant depuis un enrouleur disposé indifféremment dans le becquet fixe 1 ou sur la lame mobile 2. La bande flexible peut également servir de support à des pistes conductrices.

Une autre solution consiste à placer des éléments conducteurs de l'électricité servant de rails sur une paroi intérieure du becquet 1, sur lesquels glissent des patins collecteurs disposés sur la lame mobile 2.

Un groupe motorisé 4 permet d'entrainer la lame mobile 2 le long de l'axe longitudinal XX', vers l'avant ou vers l'arrière. Ce groupe motorisé 4 peut par exemple comporter un système à vis sans fin.

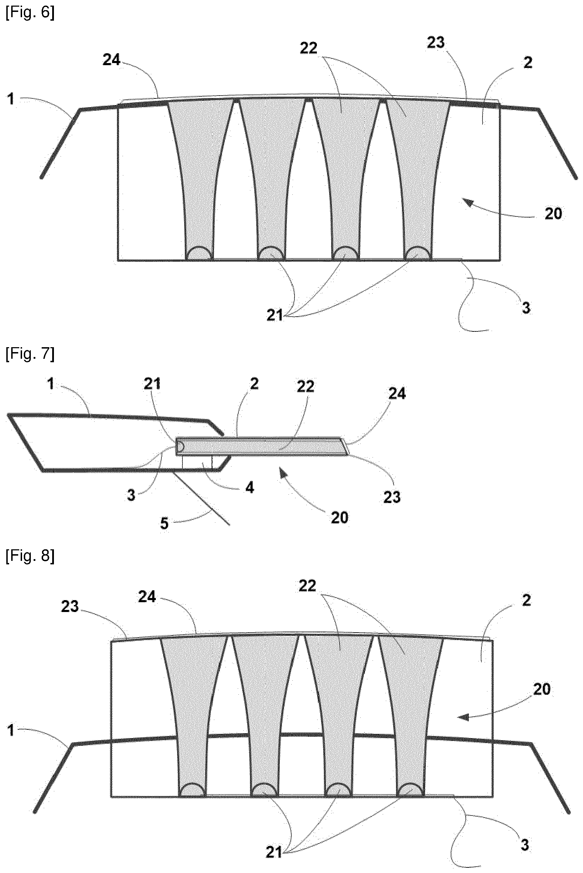

Les figures 5 et 6 représentent le dispositif aérodynamique dans la même position retractée que précédemment lorsque les sources de lumière sont activées (en couleur grisée).

Les figures 7 et 8 représentent le dispositif aérodynamique lorsque la lame mobile est déployé selon la direction longitudinale et que les sources de lumière sont activées.

Il est utile de faire observer ici que l'angle d'incidence autour de l'axe transversal YY' du dispositif lumineux 20 ne change pas lorsque la lame mobile 2 passe de la position déployée à la position rétractée et inversement. Le flux de lumière émis vers l'arrière du véhicule par le dispositif lumineux 20 reste donc sensiblement constant, quelle que soit la position de la lame mobile 2.

La partie structurelle de la lame mobile 2 est réalisée préférentiellement par moulage d'une matière thermoplastique telle que du polypropylène (PP) chargé ou non, du polyamide (PA), du polycarbonate (PC), du polymétacrylate de méthyle (PMMA) ou encore du polytéréphtalate de butylène (PBT). On entend ici par partie structurelle la partie de la lame mobile conférant à cette dernière sa forme générale et sa résistance aux efforts aérodynamiques et d'actionnement.

Il peut donc s'avérer particulièrement utile et rentable de surmouler simultanément la partie structurelle de la lame mobile sur le ou les guides de lumière 22 et sur la verrine de protection 24 ou de réaliser ces pièces par bi-injection en une seule opération.

Une alternative de réalisation consiste à réaliser la partie structurelle de la lame mobile 2 dans un matériau apte à conduire la lumière, pour combiner la partie structurelle et le guide de lumière dans une pièce unique venue de matière.

Pour réaliser cette pièce unique les matériaux suivants peuvent convenir : polypropylène naturel translucide, cyclo oléfines copolymères (COC), polyéthylène (PE), polyamide (PA), polycarbonate (PC), acrylonitrile butadiène styrène (ABS), mélange de polycarbonate (PC), acrylonitrile butadiène styrène (ABS), polystyrène (PS) et polyméthacrylate de méthyle (PMMA).

Une fois l'opération de moulage terminée, on recouvre l'ensemble de la pièce d'un revêtement opaque ne laissant pas passer la lumière, formé à titre d'exemple d'une ou plusieurs couches de peinture, en prenant soin de ne pas recouvrir la surface d'entrée placée en vis-à-vis des sources de lumière et la surface de sortie placée au niveau du bord de fuite. Une alternative de réalisation peut également consister à recouvrir la pièce d'un film adhésif opaque.

On mettra utilement en œuvre à cet effet les techniques connues de marouflage ou de grattage des surfaces à l'aide d'un rayon laser.

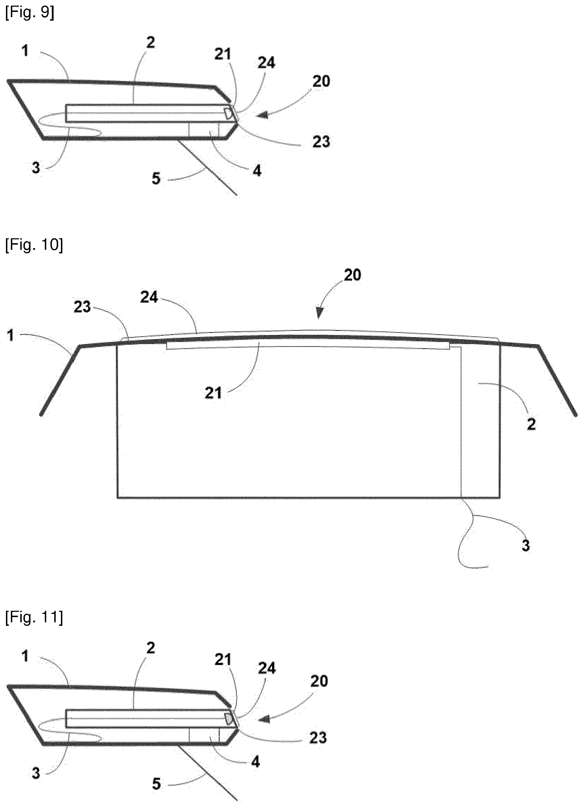

Les figures 9 à 14 représentent un dispositif aérodynamique selon un deuxième mode de réalisation de l'invention dans lequel la source de lumière 21 du dispositif lumineux 20 est placée directement sur le bord de fuite 23 ou à proximité immédiate de ce dernier.

La source de lumière 21 chemine transversalement le long du bord de fuite 23.

Ce dispositif lumineux 20 est utilement formé d'une pluralité de diodes électroluminescentes encapsulées dans une gaine transparente et souple. A titre d'exemple, la gaine peut être réalisée en silicone transparent et former un cordon de faible section, apte à être logé dans l'espace étroit formant le bord de fuite et dont le galbe épouse la forme généralement cintrée du bord de fuite 23.

On entend ici par proximité immédiate, de manière similaire à ce qui est indiqué dans les paragraphes précédents, les quelques millimètres séparant la source de lumière proprement dite et l'extrémité arrière de la lame mobile 2 formés à titre d'exemple par l'épaisseur de la surface arrière de la verrine de protection 24 ou par une épaisseur du cordon souple enveloppant la source de lumière.

Les figures 9 et 10 illustrent le dispositif aérodynamique en position retractée.

De manière analogue à la première forme de réalisation, une verrine de protection 24 peut utilement être disposée sur le bord de fuite 23 à l'arrière du dispositif lumineux 21.

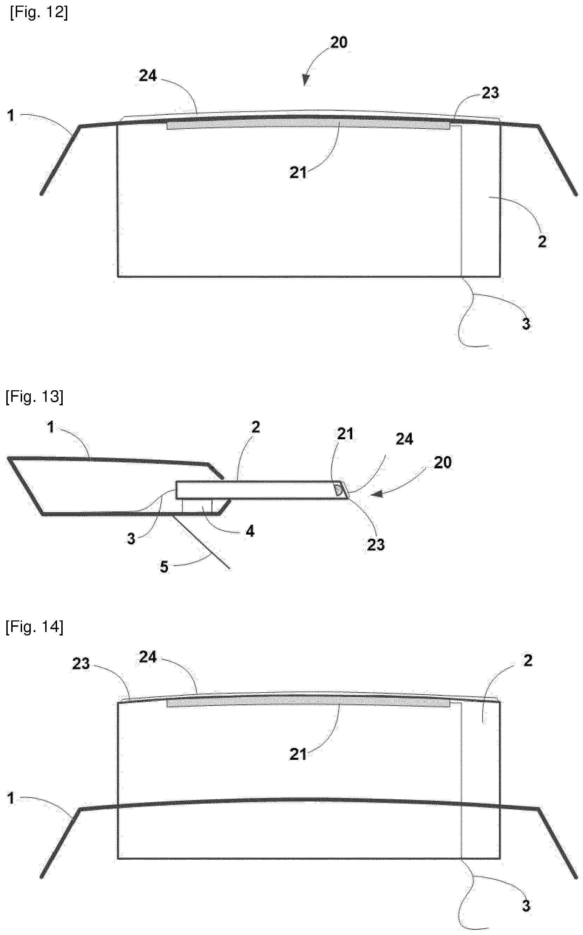

Les figures 11 et 12 illustrent le même dispositif aérodynamique selon le deuxième mode de réalisation lorsque la lame mobile est en position rétractée et que les sources de lumière sont activées.

Et les figures 13 et 14 illustrent le cas dans lequel la lame mobile est en position déployée et que les sources de lumière sont activées.

Les enseignements et les avantages liés à ce deuxième mode de réalisation sont similaires à ceux décrits ci-dessus pour le premier mode de réalisation.

En particulier, comme cela a déjà été évoqué, lorsque la partie structurelle de la lame mobile 2 est formée d'un matériau thermoplastique qui peut utilement être surmoulé sur la verrine de protection 24. Une fois cette opération achevée, le dispositif lumineux 20 comprenant les diodes électroluminescentes est inséré dans un espace adapté compris entre le bord de fuite 23 de la lame mobile et la verrine de protection 24.

### Nomenclature

- 1: : Becquet fixe.
- 2: : Lame mobile.
- 20: : Dispositif lumineux.
- 21: : Source de lumière.
- 22: : Guide de lumière.
- 23: : Bord de fuite.
- 24: : Verrine de protection.
- 3: : Câble électrique.
- 4: : Groupe motorisé.
- 5: : Vitre arrière.

## Revendications

1. Dispositif aérodynamique pour véhicule automobile comprenant un becquet fixe (1) solidaire de la carrosserie et une lame mobile (2) coulissant dans le becquet fixe (1) selon un axe longitudinal (XX') entre une position retractée et une position déployée dans le prolongement arrière du becquet fixe (1) **caractérisé en ce qu'**un dispositif lumineux (20), comprenant une source de lumière (21), est embarqué sur la lame mobile (2) et disposé de manière à émettre de la lumière au niveau d'un bord de fuite (23) s'étendant transversalement le long de l'extrémité arrière de la lame mobile (2).

2. Dispositif aérodynamique selon la revendication 1, dans lequel le dispositif lumineux (20) comprend un guide de lumière (22), comportant une surface d'entrée et une surface de sortie de la lumière, interposé entre la source de lumière (21) disposée en vis-à-vis de la surface d'entrée, et le bord de fuite (23) de la lame mobile (2) à proximité immédiate duquel est placée la surface de sortie.

3. Dispositif aérodynamique selon la revendication 2, dans lequel le matériau formant le au moins un guide de lumière (22) est distinct du matériau formant une partie structurelle de la lame mobile (2).

4. Dispositif aérodynamique selon la revendication 3, dans lequel la partie structurelle de la lame mobile (2) est formée d'un matériau thermoplastique surmoulé sur le au moins un guide de lumière (22).

5. Dispositif aérodynamique selon la revendication 3 dans lequel la partie structurelle de la lame mobile (2) et le guide de lumière (22) sont formés d'un matériau thermoplastique et sont réalisés par bi-injection.

6. Dispositif aérodynamique selon la revendication 2, dans lequel la lame mobile (2) est formée d'un matériau faisant office de guide de lumière recouvert sur l'intégralité de sa surface, à l'exception des surfaces d'entrée et de sortie de la lumière, d'un revêtement opaque ne laissant pas passer la lumière.

7. Dispositif aérodynamique selon la revendication 1, dans lequel la source de lumière du dispositif lumineux (20) est disposée sur le bord de fuite (23) ou à proximité immédiate de ce dernier.

8. Dispositif aérodynamique selon la revendication 7, dans lequel le dispositif lumineux (20) est formé d'une pluralité de sources de lumière (21) encapsulées dans une gaine transparente et souple.

9. Dispositif aérodynamique selon l'une quelconque des revendications précédentes, dans lequel une verrine de protection (4) est montée à l'extrémité arrière du bord de fuite (23) pour protéger le dispositif lumineux (20) des agressions extérieures.

10. Dispositif aérodynamique selon la revendication 9, dans lequel une partie structurelle de la lame mobile (2) est formée d'un matériau thermoplastique surmoulée sur la verrine de protection (24).

11. Dispositif aérodynamique selon l'une quelconque des revendications précédentes, dans lequel le dispositif lumineux (20) émet de la lumière sur tout ou partie de la longueur du bord de fuite (23) de la lame mobile (2).

12. Dispositif aérodynamique selon l'une quelconque des revendications précédentes, dans lequel l'alimentation électrique de la source de lumière (21) est formée par :
- un câble électrique (3) disposé à l'intérieur d'une gaine souple, ou
- une bande flexible supportant des pistes conductrices de l'électricité, ou
- des rails conducteurs de l'électricité, disposés sur une surface interne du becquet fixe (1), collaborant avec des patins collecteurs disposés sur la lame mobile (2).

13. Dispositif aérodynamique selon l'une quelconque des revendications précédentes dans lequel la ou les sources de lumière (21) sont formées par des diodes électroluminescentes.
